# EUROPÄISCHE PATENTANMELDUNG

(11) **EP 1 130 189 A2**
(43) Veröffentlichungstag der Anmeldung: **05.09.2001**
(21) Anmeldenummer: 01890041.5
(22) Anmeldetag: 20.02.2001
(51) Int. Cl.: E04F 15/024, E04F 15/02, B32B 5/18

(54) **Doppelbodenplatte**

(30) Priorität: 21.02.2000 AT 2552000
(71) Anmelder: Apsys Gesellschaft für anwendungstechnische Polyurethan-Systeme m.b.H, 7023 Pöttelsdorf (AT)
(72) Erfinder: Goschenhofer, Manfred, 2542 Kottingbrunn (AT)
(74) Vertreter: Kliment, Peter

(57) **Zusammenfassung**

Zwei- oder mehrschichtige Bodenplatte zum Verlegen in Gebäuden oder im Freien mit einer Oberflächenschicht (2) vorzugsweise aus Marmor, Stein, Keramik oder Metall und einer Tragschicht (1) aus aufgeschäumten Kunststoff, der direkt mit der Oberflächenschicht (2) verschäumt ist, wobei die Tragschicht (1) an ihrer der Oberflächenschicht (2) gegenüberliegenden Seite mit einer Unterschicht (4) verschäumt ist.

## Beschreibung

Die vorliegende Erfindung bezieht sich auf eine mehrschichtige Bodenplatte gemäß dem Oberbegriff des Anspruchs 1.

Solche Bodenplatten werden in Gebäuden aller Art, aber auch im Freien verlegt. Ausschlaggebend für die Wahl der Bodenplatten ist deren sichtbare Oberfläche. Diese kann beispielsweise aus Marmor, Stein, Keramik oder anderen Materialien gefertigt sein, sodass eine Abstimmung mit der Umgebung, etwaig vorhandener Möbel, Tapeten oder anderen Kriterien je nach Wunsch erfolgen kann.

Bei herkömmlichen Bodenplatten nach dem Stand der Technik werden Platten aus den oben genannten Materialien mit billigen Steinplatten verklebt, wobei mittels eines aufwendigen und kostenintensiven Schleifverfahrens unterschiedliche Dicken der so entstehenden Platten hergestellt werden.

Um den in verschiedensten Fällen geforderten Brandschutz gerecht zu werden, werden die Steinplatten an ihrer anderen Seite noch zusätzlich mit brandbeständigen Platten und/oder dünnen Blechplatten verleimt.

Dieses Herstellungsverfahren ist sehr aufwendig und zeichnet sich vor allem durch eine sehr lange Herstellungs- und Durchlaufzeit aus. Auf kurzfristigen Bedarf am Markt kann daher nicht reagiert werden.

Ein weiterer Nachteil dieser bekannten Bodenplatten ist deren hohes Gewicht, dass zwischen 30 kg und 50 kg pro Platte liegt. Somit sind sowohl Transport als auch Montage sehr kompliziert und aufwendig. Durch die spröde Oberfläche von Marmor, Stein und Keramik ist aufgrund des hohen Gewichtes auch eine hohe Beschädigungsgefahr beim Verlegen gegeben, da die Platten Kante an Kante gelegt werden und kleine Unachtsamkeiten sofort zu einer Absplitterung der Oberfläche führen.

Auch das nachträgliche Entfernen dieser bekannten Bodenplatten, welches durch Nachrüsten von Schächten oder Kabeln immer wieder erforderlich ist, ist jedes Mal mit einem hohen Beschädigungsrisiko verbunden, da die Platten aufgrund ihres Eigengewichtes nur sehr schwer zu handhaben sind und sie beim Wiedereinpassen exakt in das vorhandene Loch gelegt werden müssen.

In DE 24 32 273 wird daher vorgeschlagen, die Keramik- oder Naturstein-Deckschicht von Boden- oder Wandplatten mit einer Tragschicht aus wärmedämmendem Material, insbesondere Kunststoff, zu kombinieren. Die Tragschicht weist dabei zur Unterseite der Platte offene Kanäle für Heizungs-, Sanitär- oder Elektroinstallationen auf.

In DE 31 28 210 A1 wird eine Fußbodenplatte mit einer Mehrzahl von Fliesen beschrieben, die Seite an Seite an einer Grundplatte aus Kunststoffmaterial, vorzugsweise aus Polyurethan, angeordnet sind.

In DE 21 29 057 werden ein Verfahren zur Herstellung von Bauplatten aus dünnwandigem Naturstein sowie eine nach diesem Verfahren gefertigte Bauplatte offenbart. Eine Trägerplatte, vorzugsweise aus Polyurethanschaum, wird mit einer Natursteinplatte beidseitig entweder verschäumt oder verklebt. Die Natursteinplatte wird danach in zwei Teile geteilt und der Vorgang wahlweise wiederholt.

In CH 548 859 und US 4 172 168 werden ebenfalls zweiteilige Bodenplatten beschrieben, bei der die Trägerplatte vorzugsweise aus Polyurethan besteht.

Zweiteilige Bodenplatten der beschriebenen Art mit einer Deckschicht sowie einer Kunststoff-Trägerschicht haben den Vorteil eines vergleichsweise geringen Gewichts bei hohen Festigkeitswerten. Der entscheidende Nachteil dieser zweiteiligen Bodenplatten ist jedoch, dass sie direkt in Rohbeton verlegt werden müssen. Ist eine Verlegung in Rohbeton nicht möglich oder nicht erwünscht, können Bodenplatten dieser Art nicht verwendet werden.

Ziel der Erfindung ist daher eine Bodenplatte mit den Vorteilen bekannter, zweiteiliger Platten, aber deutlich erweiterten Anwendungsbereichen, indem die zwingende Eigenschaft der Verlegung direkt in Rohbeton vermieden wird.

Ein weiteres Ziel dieser Erfindung ist ein Verfahren zur Herstellung solcher Bodenplatten.

Ein weiters Ziel der vorliegenden Erfindung ist ein spezieller Terrassenboden, bei welchem die erfindungsgemäßen Bodenplatten eingesetzt werden.

Erfindungsgemäß wird dies durch die kennzeichnenden Merkmale des Anspruchs 1 erreicht.

Durch die Verwendung einer Trägerschicht aus Kunststoff, vorzugsweise aufgeschäumtes Polyurethan, kann zunächst die bedeckende, schwere Steinplatte vergleichsweise dünn gestaltet werden. Die Tragschicht kann auf einfache Art und Weise sowohl in ihrer Dicke als auch in ihrer Dichte variiert werden und den Erfordernissen der Verlegung angepasst werden, ohne dass komplizierte und aufwendige Schleifarbeiten erforderlich wären. Das Gewicht des aufgeschäumten Kunststoffes ist sehr gering, sodass das Gesamtgewicht der erfindungsgemäßen Bodenplatten ebenfalls geringer ausfällt als etwa bei massiven Steinplatten gleicher Dicke. Gemäß den kennzeichnenden Merkmal des Anspruchs 1 kann die Tragschicht an ihrer Unterseite nun mit einer weiteren Schicht verschäumt sein. Diese kann je nach Verwendungszweck beispielsweise eine Stahlplatte (Anspruch 2) oder eine Calciumsulfatplatte (Anspruch 3) sein, wobei letztere speziell für den Brandschutz verwendet wird. Prinzipiell sind jedoch alle bekannten Materialien als Unterschicht denkbar.

Durch das kennzeichnende Merkmal des Anspruchs 4 wird die Gefahr der Beschädigung der Oberschicht, welche ja in erster Linie für das optische Aussehen der Bodenplatte verantwortlich ist, minimiert. Die Kunststoffschichtumrandung ermöglicht ein weiches Einsetzen der Bodenplatten, egal ob es sich dabei um eine Erstverlegung oder um das nachträgliche Einsetzen oder Ersetzen einer Bodenplatte handelt. Selbst wenn eine Bodenplatte beim Verlegen versehentlich aus der Hand gleiten sollte, so kann durch die elastische Kunststoffumrandung der harten Oberschicht keine Verletzung der bereits verlegten Oberschichten entstehen. Die Farbe der Umrandung kann auf die Oberflächenschicht abgestimmt sein.

Durch das Merkmal des Anspruchs 5 wird verhindert, dass die Kunststoffumrandung über die Oberflächenebene der Oberflächenschicht hinausragt.

Durch das Merkmal des Anspruchs 6 können erfindungsgemäße Bodenplatten mit besonders hoher Belastbarkeit hergestellt werden.

Die Merkmale des Anspruches 7 beschreiben eine Ausführungsmöglichkeit der erfindungsgemäßen Bodenplatte, welche eine zusätzliche Sicherheit bei der Verlegung geben.

Durch das kennzeichnende Merkmal des Anspruchs 8 wird verhindert, daß im Falle eines Brandes unterhalb der Bodenplatten Rauch aus den Fugen zwischen den einzelnen Platten dringt.

Die Merkmale der Ansprüche 9 und 10 beschreiben ein Verfahren zur Herstellung der erfindungsgemäßen Bodenplatten. Ganz wesentlich dabei ist die Unempfindlichkeit des Verfahrens gegenüber unterschiedlich dicken Oberflächenplatten. Diese können mit wesentlich höheren Toleranzen geschnitten werden, da die aufgeschäumte Tragschicht, die Unregelmäßigkeiten der Dicke der Oberflächenplatten ausgleicht und so die Gesamtdicke der Bodenplatten stets konstant bleibt.

Durch die Merkmale des Anspruchs 11 können gegenüber herkömmlichen obersten Geschossdecken bei gleicher Wärmeisolierung wesentlich dünnere Geschossdecken gebaut werden.

Gemäß Anspruch 11 und 12 kann auf einfache Art und Weise eine Feuchtigkeitsisolierung realisiert werden.

Durch die Merkmale der Ansprüche 13 und 14 können die Terrassenbodenplatten so verlegt werden, dass insgesamt ein im Querschnitt keilförmiger Terrassenboden entsteht. Dies verhindert eine zu große Stufe beim Übergang zwischen dem Terrassenboden zum Rauminneboden, wie sie bei herkömmlichen Terrassenböden zu finden ist.

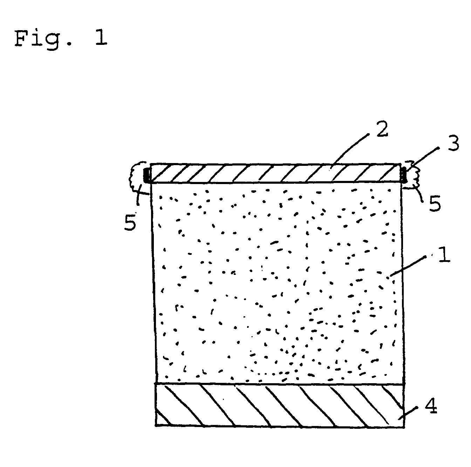

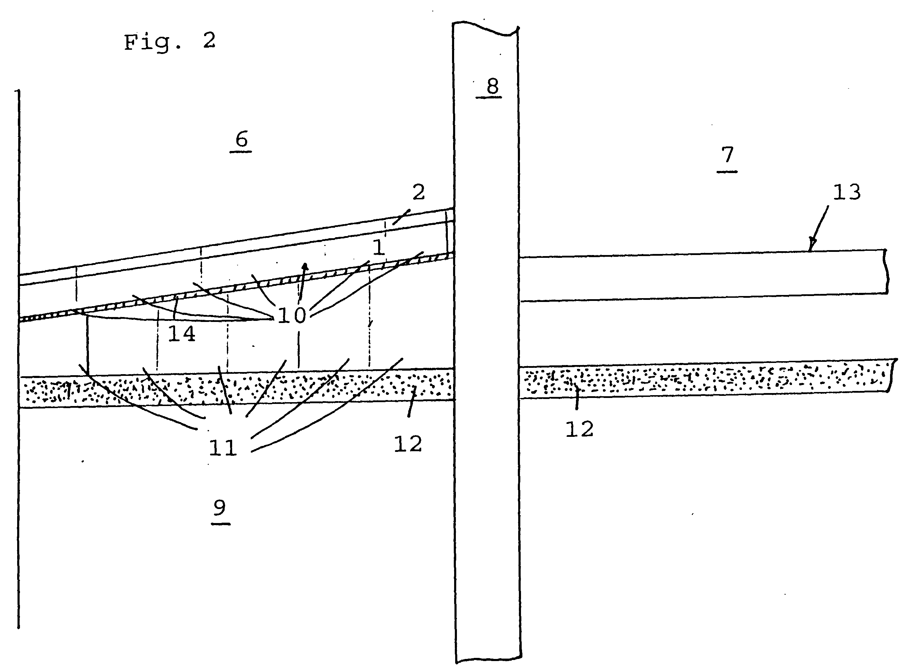

Im folgenden wird die Erfindung nun anhand der Fig. 1 beschrieben.

Eine Tragschicht 1 aus aufgeschäumtem Kunststoff, vorzugsweise Polyurethan ist mit einer Oberflächenschicht 2 verschäumt.

Zu diesem Zwecke wird die Oberflächenschicht in Form einer Oberflächenplatte in eine Form eingebracht, die dann geschlossen wird. Danach werden zwei flüssige Komponenten in die Form eingespritzt, die in die Poren der Oberflächenplatte eindringen, miteinander reagieren und aufschäumen. Nach dem Aufschäumen härtet der Polyurethan Kunststoff selbstständig aus. Die so entstehende Verbindung mit der Oberflächenschicht, beispielsweise Marmor, Stein, Keramik oder aber auch Metall, zeichnet sich vor allem durch eine sehr hohe Festigkeit aus. Der aufgeschäumte Kunststoff dient außerdem als guter Schall- und Wärmeisolator, sodass eine zusätzliche Isolation nicht erforderlich ist. Im Falle der Verwendung von Stahl oder Buntmetallen als Oberflächenschicht ist die Hinzugabe eines Haftvermittlers erforderlich, um eine ausreichende Festigkeit zwischen dem Polyurethan-schaumstoff und der Oberflächenschicht herzustellen.

Das erfindungsgemäße Verfahren ermöglicht den Einsatz von wesentlich dünneren Oberflächenplatten, wodurch ein Großteil der Materialkosten an den teuren Oberflächenmaterialien eingespart werden kann. Außerdem können die Oberflächenplatten wesentlich ungenauer, dh. mit höheren Toleranzen gefertigt werden, da nach dem Verschäumen mit der Tragschicht jede auf diese Art und Weise (in der selben bzw. identischen Form) hergestellte Bodenplatte stets die eingestellte, gleiche, konstante Gesamtdicke aufweist. Eine mögliche Variation der Dicke der Oberflächenplatten wirkt sich auf die Dicke der Bodenplatte nicht aus und wird sozusagen automatisch korrigiert.

Die Oberflächenschicht ist weiters entlang ihrer Kanten von einer Kunststoffumrandung 3 umgeben, die nicht plan mit der Oberflächenebene der Oberflächenschicht abschließt. Dadurch wird verhindert, dass Teile dieser Kunststoffumrandung über die Oberflächenschicht hinausstehen und so ein Hindernis am Boden entsteht.

Die erfindungsgemäße Bodenplatte kann dabei weiterhin direkt in Rohbeton verlegt werden, beispielsweise in Rohbetondecken von Neubauten. Die Rohbetonschicht dient dabei als zusätzliche Versteifung.

Wenn eine Verlegung in Rohbeton nicht möglich oder nicht gewünscht ist, kann aufgrund der an der Unterseite der Tragschicht 1 zusätzlich angeordneten Unterschicht 4, die wie die Oberschicht 1 mit der Tragschicht 2 verschäumt ist, diese Doppelbodenplatte aber dennoch verwendet werden. Eine solche Unterschicht 4 dient außerdem als Versteifung der Tragschicht 1 aus aufgeschäumten Kunststoff und kann zusätzliche Aufgaben erfüllen. Beispielsweise kann eine Calciumsulfatplatte als Unterschicht verwendet werden, um die Brandschutzbestimmungen zu erfüllen.

Weiters ist vorgesehen in die aufgeschäumte Tragschicht zusätzliche Elemente wie beispielsweise Drahtgitter oder Gitterrohre aus HPL (High Pressure Laminat) Materialienstreifen als Nut/Federelemente mit einzuschäumen, welche mit Löchern ausgestattet sind, um eine kraftschlüssige Verbindung mit dem Ppolyurethan-Schaum zu erzielen. Das Drahtgitter oder der HPL-Rost dient dazu, die Belastbarkeit der Bodenplatte zu erhöhen. Das Nut/Federelement erleichtert das Verlegen der Bodenplatte.

Um einen kompletten Fußboden zu verlegen sind selbstverständlich eine Vielzahl an erfindungsgemäßen Bodenplatten zu verwenden. Um zu verhindern, dass im Falle eines Brandes unterhalb der Bodenplatten, beispielsweise eines Kabelbrandes, Rauch zwischen den Fugen hervordringt, ist weiters wahlweise vorgesehen, dass die Stöße zwischen den einzelnen erfindungsgemäßen Bodenplatten mit einem Brandschutzlaminat 5 ausgeschäumt werden.

Es können auch mehrere unterschiedliche Oberflächenplatten mit einer einzigen Tragschicht verbunden werden, sodass eine Bodenplatte ein Muster aufweist, welches durch Aneinanderreihen der Bodenplatten wiederholt werden kann.

Ein Anwendungsgebiet solcher erfindungsgemäßen Bodenplatten ist die Verlegung im Freien auf Terrassen, welche sich beispielsweise über dem obersten Geschoß eines Wohnhauses befinden. Solche Terrassen 6 sind meistens anschließend an einen Wohninnenraum 7 angeordnet und über eine Terrassentür 8 aus dem Wohninnenraum 7 begehbar.

Unter diesen Terrassen befindet sich ebenfalls ein Wohninnenraum 9 der im Geschoß darunter angeordneten Wohnung.

Da es sich bei dem Boden dieser Terrassen um eine Außenwand handelt, die einen Innenraum 9 von der Umgebung 6 trennt, sind spezielle Wärmeschutzvorschriften zu beachten und spezielle Dämmwerte einzuhalten.

Deshalb ist vorgesehen, die erfindungsgemäßen Bodenplatten 10 mit Tragschicht 1 und Oberflächenschicht 2 auf Isolierunterplatten 11 aus Polyurethan zu verlegen. Diese weisen einen hohen Isolationswert auf, so daß gemeinsam mit der Isolierwirkung der aufgeschäumten Tragschicht 1 der erfindungsgemäßen Bodenplatte 10 die per Gesetz vorgeschriebene Wärmedämmung erreicht wird, wobei gleichzeitig eine geringere Dicke der gesamten Terrassenbodenplatte erreicht wird. Die Isolierunterplatten werden direkt auf den Unterbeton 12 verlegt.

Zusätzlich kann die Isolierunterplatte 11 keilförmig ausgebildet sein, sodass die Dicke der nebeneinander angeordneten Terrassenbodenplatten stetig abnimmt. Auf diese Art und Weise können Höhenunterschiede zwischen dem Bodenaufbau 13 des Wohninnenraums 7 und dem Terrassenboden minimiert werden. Eine Stufe zwischen dem Terrassenboden und dem Boden 13 des Wohninnenraums 7 ist somit nur mehr in einem geringen Ausmaß vorhanden und kann beispielsweise durch das untere Rahmenprofil einer Balkontüre ausgeglichen werden.

Zwischen Isolierunterplatte 11 und erfindungsgemäßer Bodenplatte 10 ist weiters eine Folie zur Feuchtigkeitsisolierung verlegt und verschweißt. Alternativ dazu kann auch ein Polyurethan-Kompakt-Gießmaterial anstelle der Folie aufgespritzt werden. Dieses Kompaktgießmaterial zeichnet sich durch große Elastizität aus und ist vollkommen wasserundurchlässig. Es kann außerdem vollkommen stoß- und fugenfrei auf jede beliebige Fläche aufgebracht werden und bildet zusätzlich zum Baukörperanschluß eine unlösbare Verklebung bzw. Wannenausbildung.

## Patentansprüche

1. Mehrschichtige Bodenplatte zum Verlegen in Gebäuden oder im Freien mit einer Oberflächenschicht (2) vorzugsweise aus Marmor, Stein, Keramik oder Metall und einer Tragschicht (1) aus aufgeschäumten Kunststoff, der direkt mit der Oberflächenschicht (2) verschäumt ist, **dadurch gekennzeichnet, dass** die Tragschicht (1) an ihrer der Oberflächenschicht (2) gegenüberliegenden Seite mit einer Unterschicht (4) verschäumt ist.

2. Bodenplatte nach Anspruch 1, **dadurch gekennzeichnet, dass** die Unterschicht (4) als Stahlplatte ausgebildet ist.

3. Bodenplatte nach einem der Ansprüche 1 und 2, **dadurch gekennzeichnet, dass** die Unterschicht (4) als Calciumsulfatplatte ausgebildet ist.

4. Bodenplatte nach einem der Ansprüche 1 bis 3, **dadurch gekennzeichnet, dass** die Oberflächenschicht (1) entlang ihrer Kanten von einer Kunststoffschicht (3), vorzugsweise Polyurethan-Kompaktmaterial umrandet ist.

5. Bodenplatte nach Anspruch 4, **dadurch gekennzeichnet, dass** die Kunststoffumrandung (3) in einem Abstand zur Oberflächenebene der Oberflächenschicht (1) endet.

6. Bodenplatte nach einem der Ansprüche 1 bis 5, **dadurch gekennzeichnet, dass** in der Tragschicht (1) ein Metallgitter eingeschäumt ist.

7. Bodenplatte nach einem der Ansprüche 1 bis 6, **dadurch gekennzeichnet, dass** wahlweise eingeschäumte Nut- bzw. Federelemente aus einem gelochten Rost aus HPL (High Pressure Laminat) gefertigt sind.

8. Anordnung von mehreren Bodenplatten gemäß den Ansprüchen 1 bis 7, **dadurch gekennzeichnet, dass** in den Stössen zwischen den einzelnen Bodenplatten zusätzlich ein Brandschutzlaminat (5) miteingeschäumt ist.

9. Verfahren zur Herstellung von Bodenplatten nach einem der Ansprüche 1 bis 8, **dadurch gekennzeichnet, dass** eine Oberflächenplatte (2), vorzugsweise aus Marmor, Stein, Keramik oder Metall, in eine Form eingebracht wird und anschließend mindestens zwei flüssige Komponenten, vorzugsweise Polyol und Isocyanat, in die Form eingespritzt werden, welche bei Kontakt zu Hart- oder Hart-Integralschaum aufschäumen.

10. Verfahren nach Anspruch 9, **dadurch gekennzeichnet, dass** zusammengehörende, für denselben Boden produzierte Bodenplatten stets in die gleiche bzw. eine identische Form eingebracht werden und dabei die Dicke der Form, unabhängig von der Dicke der Oberflächenplatte stets konstant gehalten wird.

11. Terrassenbodenplatte zur Verlegung an obersten Geschossdecken, welche eine Außenwand bilden und Wohnräume im obersten Geschoß eines Wohnhauses von der Umgebung trennen, **dadurch gekennzeichnet, dass** eine Bodenplatte nach einem der Ansprüche 1 bis 8 auf eine Isolierunterplatte (11), welche aus Polyurethan gefertigt ist, verlegt ist.

12. Terrassenbodenplatte nach Anspruch 11, **dadurch gekennzeichnet, dass** zwischen der Bodenplatte (10) nach einem der Ansprüche 1 bis 8 und der Isolierunterplatte (11) eine Folie (14) verlegt ist.

13. Terrassenbodenplatte nach Anspruch 11, **dadurch gekennzeichnet, dass** zwischen der Bodenplatte (10) nach einem der Ansprüche 1 bis 8 und der Isolierunterplatte (12) Polyurethan-Kompaktgießmaterial (14) aufgespritzt ist.

14. Terrassenbodenplatte nach einem der Ansprüche 11 bis 13, **dadurch gekennzeichnet, dass** die Isolierunterplatte (12) keilförmig ausgebildet ist.
